# EUROPEAN PATENT APPLICATION

(11) **EP 1 842 469 A1**
(43) Date of publication of application: **10.10.2007**
(21) Application number: 06380067.6
(22) Date of filing: 06.04.2006
(51) Int. Cl.: A47J 37/12

(54) **Oil on water fryer**

(71) Applicant: Electrodomesticos Taurus S.L., 25790 Oliana (Lleida) (ES)
(72) Inventor: Marin Marin, Jesús, 25970 Oliana (Lleida) (ES); Alet Vidal, Josep, 25970 Oliana (Lleida) (ES); Codina Vilana, Antoni, 25970 Oliana (Lleida) (ES); Trench Roca, Lluis, 25970 Oliana (Lleida) (ES)
(74) Representative: Gislon, Gabriele

(57) **Abstract**

It includes a vessel (1) for containing a layer of oil (2) on top of a layer of water (3), a heating element (4) immersed in the layer of oil, temperature control means for controlling the temperature of the oil, and a basket (5) for containing food to be fried adapted to be immersed at least partially in the layer of oil (2) above said heating element (4). Immersed in the layer of oil underneath heating element (4) deflection means are arranged, configured to divert and dissipate any turbulent currents produced in layer of oil (2) by shaking basket (5) and thereby to prevent the oil from a top region of layer of oil (2) at a temperature higher than the boiling temperature of water from coming into contact with layer of water (3).

## Description

### Technical field

The present invention relates generally to a fryer of the type comprising a vessel for containing a layer of frying oil on a layer of water, and more particularly to a fryer including an arrangement of deflection screens to prevent any turbulence in the layer of oil from reaching the layer of water.

### Prior art

Fryers are known that have a vessel containing oil and water, where a layer of oil is formed on top of a layer of water owing to the difference in the density of each liquid. Inside the vessel at least one heating element is provided immersed in the layer of oil to heat said layer of oil. With this, a top region of the layer of oil reaches a temperature higher than the temperature reached by the layer of water. Only by way of example, the working temperature of the oil can be slightly lower than the maximum temperature recommended by the WHO, that is, approximately 190°C, while the temperature of the water must be below the boiling temperature of water, preferably about 70°C. A lower region of the layer of oil in contact with a top region of the layer of water does not reach the water boiling temperature, thus preventing the water from starting to boil, which could produce dangerous splashes of burning oil and water outside the vessel. A basket containing the food to be fried can be immersed in said top region of the layer of oil, above the heating element. Said basket is generally connected to a handle (although said handle could be removable), which is arranged in an external position when the basket is immersed in the oil, so that the basket can be handled using said handle.

The existence of the layer of water underneath the layer of oil has the advantageous effect of reducing the oxidation speed of the oil, preventing the deterioration of the layer of oil caused by sediments of carbonised fried remains, and reducing the production of smoke and oil vapours.

A drawback of this type of fryers is that, when a user grasps the handle of the basket and shakes the basket in the oil so as to move the food to be fried during the frying in order to it is all fried evenly, which is a usual and necessary action, said vigorous shaking of the basket causes turbulence or displacements in the layer of oil that can lead oil at a high temperature to come into contact with the layer of water, thereby causing the water to start boiling violently underneath the oil, which produces said splashes of burning oil and water outside the vessel, which can cause relatively serious injuries.

Patent US-A-6101929 describes a fryer including a vessel containing oil and water, wherein a layer of oil is formed on top of a layer of water by the density difference therebetween. Inside the vessel heating pipes are provided for heating the layer of oil and cooling pipes for cooling a part of the layer of oil between each heating pipe and the layer of water. The fryer includes water level detection means for detecting when a boundary surface between the layers of oil and water reaches a predetermined level below the cooling pipes, and control means connected to said detection means to stop the heating pipes from heating the layer of oil when the boundary surface is detected. However, the cooling of the oil by said cooling pipes may not be quick enough to prevent negative effects in the event of any violent turbulence in the layer of oil caused by shaking the basket, and also, adding said cooling pipes and water level detection means makes the fryer more complicated and more expensive.

### Disclosure of the invention

An object of the present invention is to provide a fryer with oil on water having a device intended to prevent any turbulence or displacements produced in the layer of oil, caused by shaking the basket or other reasons (moving the fryer as a whole, etc.) from reaching the layer of water.

The present invention contributes to achieving the preceding and other objects by providing a fryer with oil on water, of the type comprising a vessel for containing oil and water, wherein a layer of oil is formed above a layer of water owing to the different densities of both liquids, at least one heating element immersed in the layer of oil for heating the layer of oil, temperature control means for controlling the temperature of the oil, and a basket with perforated walls for containing food to be fried adapted for being immersed at least partially in a top region of the layer of oil, above said heating element, said basket being provided with a handle arranged so that it adopts an accessible position when the basket is immersed at least partially in the layer of oil. The fryer according to the present invention is characterised in that it includes deflection means immersed in the layer of oil underneath the heating element and shaped and arranged so as to divert and dissipate turbulent currents produced in the layer of oil by shaking the basket and thereby to prevent the oil from a top region of the layer of oil that is at a temperature higher than the boiling temperature of water from coming into contact with the layer of water.

The deflection means include preferably one or more tilted deflection screens immersed in the layer of oil. According to one embodiment, several of said titled deflection screens are arranged so that respective upper edges of the screens are adjacent to internal side walls of the vessel and lower edges of the screens, opposite said upper edges, are located closer to the centre and closer to the bottom of the vessel than the upper edges, separations existing between adjacent side edges of the screens. With this arrangement, any possible downwards currents of oil at a high temperature coming from the top region of the layer of oil impinge against the deflection screens and are diverted and dissipated before they can reach the layer of water, thus avoiding the risk of the water of the layer of water starting to boil.

From a point of view of construction, said various deflection screens can be obtained easily and economically in one piece by punching and bending a metal plate. This integral piece defines an upper perimetrical frame from which the deflection screens extend towards the centre and towards the bottom of the vessel. Additionally, said upper perimetrical frame is sized and configured and/or shaped so as to rest on shoulders on the internal side walls of the vessel. With this, the deflection screens can be positioned and removed as a whole from the vessel considerably quickly and simply.

### Brief description of the drawings

The above and others advantages and characteristics will be more fully understood from the following detailed description of an exemplary embodiment with reference to the attached drawings, in which:
Fig. 1 is a sectional elevation view of a fryer according to an exemplary embodiment of the present invention;
Fig. 2 is an exploded perspective view of the components of the fryer in Fig. 1;
Fig. 3 is an enlarged perspective view of deflection screens forming a part of the fryer; and
Fig. 4 is a plan view of a piece of metal plate from which the deflection screens in Fig. 3 are formed.

### Detailed description of an exemplary embodiment

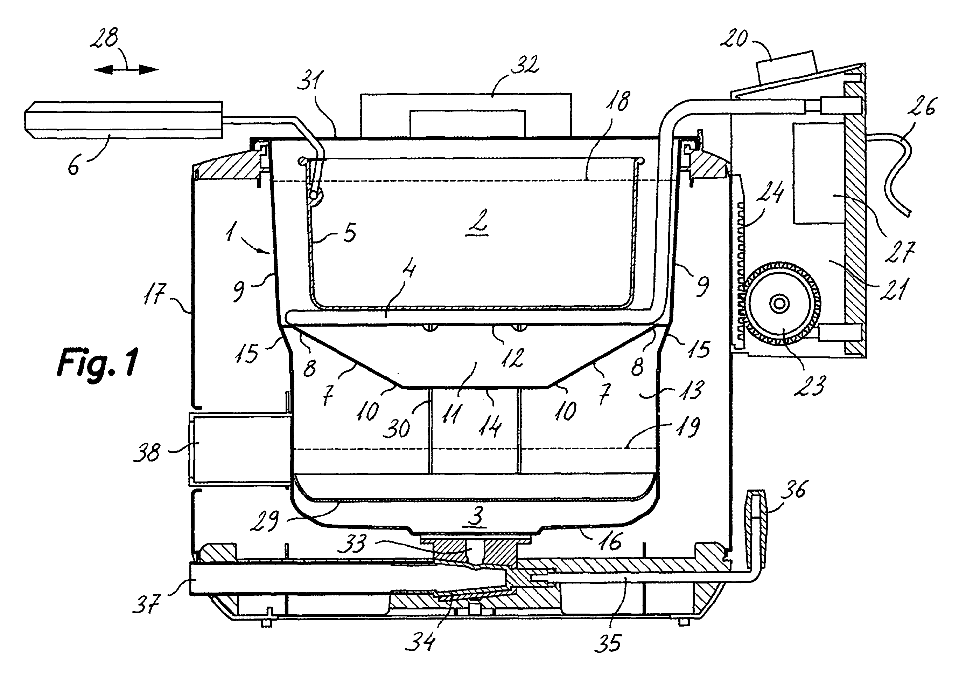

With reference to the figures, a fryer according to an exemplary embodiment of the present invention is shown including an external housing 17 supporting a vessel 1 adapted to contain oil and water. Owing to the difference in the densities of both liquids, the oil floats on top of the water so that a layer of oil 2 is formed on top of a layer of water 3. Fig. 1 shows by means of a dotted line 18 the top level of level of the layer of oil 2 and by means of a dotted line 19 a boundary surface between the layers of oil and water 2, 3. At a level that is suitable for remaining immersed in the layer of oil at least one heating element 4 is provided for heating the layer of oil. In the exemplary embodiment illustrated, said heating element 4 includes an electrical resistance in the form of a coil, although for the effects of the present invention, heating element 4 could be made up of other heating devices well known in the art in the fryer sector, such as for example heating pipes for conducting hot air heated in a gas burner.

The fryer of the present invention includes temperature control means for controlling the temperature of the oil. For example, said temperature control means include one or more temperature sensors (not shown) connected to a selector 20 and switching means for switching on and off the electrical resistance constituting the heating element 4 according to the temperature selected by selector 20 and the temperatures detected by said sensors. Preferably, the temperature control means include a maximum temperature detector (not shown) acting as a safety element for switching off the electrical resistance in the event that the oil exceeds a predetermined maximum temperature. Said temperature sensors are supported by heating element 4 so that the temperature control is performed in the oil found around the heating element, where the temperature is higher. Owing to the heating effect, convection currents are produced in the layer of oil distributing the heat particularly towards the top region of layer of oil 2 above the heating element. On the contrary, the convection currents are smaller towards a lower region of the layer of oil 2 underneath the heating element, whereby the oil in contact with the layer of water 3 does not reach a temperature near or above the boiling temperature of water.

The fryer includes a basket 5 provided with perforated walls and suitable for containing food to be fried. Said basket 5 is adapted for being immersed at least partially in the top region of layer of oil 2, above said heating element 4. In the exemplary embodiment shown, the basket rests on heating element 4, and heating element 4 is connected to a control box 21 mounted externally so that it can be moved vertically with respect to said external housing 17 of the fryer. Said control box 21 houses part of the temperature control means including selector 20, and it is connected to a connection cable 26, which, when not in use, can be stored in a cavity 27 in the control box 21.

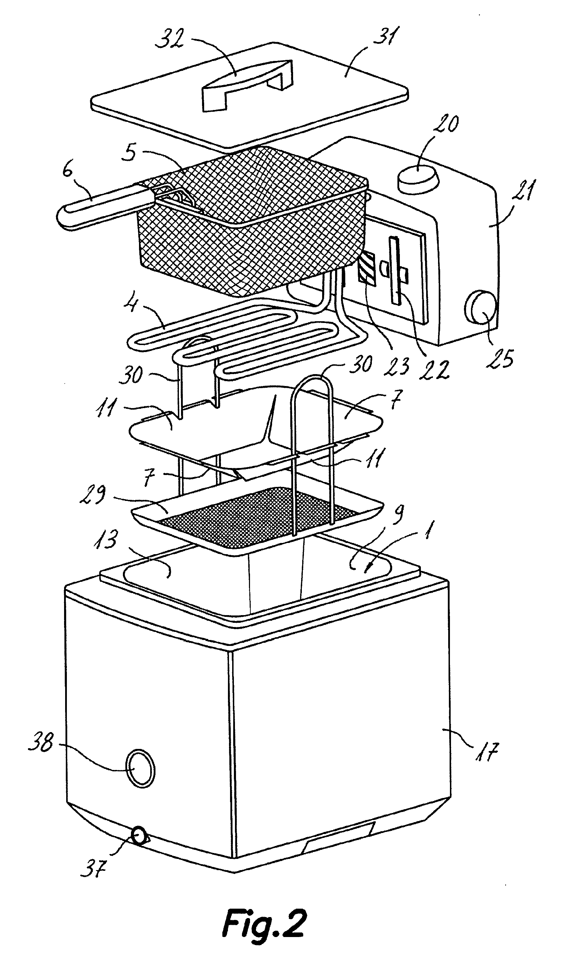

Control box 21 is connected to external housing 17 by means of an arrangement of vertical guide rails 22 (Fig. 2). Inside the control box a mechanism is provided including a toothed wheel 23 meshing with a rack 24 (Fig. 1) joined to external housing 17. A knob 25 (Fig. 2) in mechanical connection with said mechanism enables said toothed wheel 23 to rotate so as to move control box 21 up and down along the arrangement of vertical guide rails 22. The movements of control box 21 drags the heating element 4 and the basket 5 resting thereon, whereby actuating the knob 25 it is possible to arrange basket 5 in a selected frying position, in which the food to be fried is immersed in layer of oil 2 which is of greater or lesser volume depending on the quantity or type of food to be fried. Basket 5 is provided with a handle 6 arranged so that it remains in an accessible position both when basket 5 is in the frying position immersed at least partially in layer of oil 2 and when the basket 5 is in a draining position, supported on top of layer of oil 2 by means of an anchor.

During the frying, when basket 5 with the food to be fried is immersed at least partially in layer of oil 2 (Fig. 1), it is normal for a user to grasp the handle 6 to shake basket 5 so as to move the food in the oil. The fryer of the present invention includes deflection means immersed in the layer of oil underneath heating element 4. These deflection means are configured and arranged so as to divert and dissipate any possible turbulent currents produced in layer of oil 2 by shaking the basket 5 and thereby to prevent oil from a top region of layer of oil 2 at a temperature higher than the boiling temperature of water from coming into contact with layer of water 3.

In the illustrated exemplary embodiment, the deflection means include several tilted deflection screens 7, 11 having respective upper edges 8, 12 adjacent to internal side walls 9, 13 of vessel 1 and respective lower edges 10, 14 opposite said upper edges 8, 12 and lying closer to the centre and closer to the bottom of vessel 1 than upper edges 8, 12. Vessel 1 of the illustrated exemplary embodiment is substantially rectangular and includes first mutually facing internal side walls 9, second mutually facing internal side walls 13, and a bottom wall 16. First internal side walls 9 of vessel 1 are shorter than second internal side walls 13.

In the exemplary embodiment shown in Figs. 1 and 2, the deflection means include a pair of first tilted deflection screens 7 placed one in front of the other, and a pair of second tilted deflection screens 11 placed one in front of the other. Said first deflection screens 7 have respective upper edges 8 adjacent to said first mutually facing internal side walls 9 of vessel 1 and respective lower edges 10 opposite said upper edges 8 and lying closer to the centre and closer to the bottom of vessel 1 than upper edges 8, while said second deflection screens 11 have respective upper edges 12 adjacent to said second mutually facing internal side walls 13 of vessel 1 and respective lower edges 14 opposite said upper edges 12 and lying closer to the centre and closer to the bottom of vessel 1 than upper edges 12.

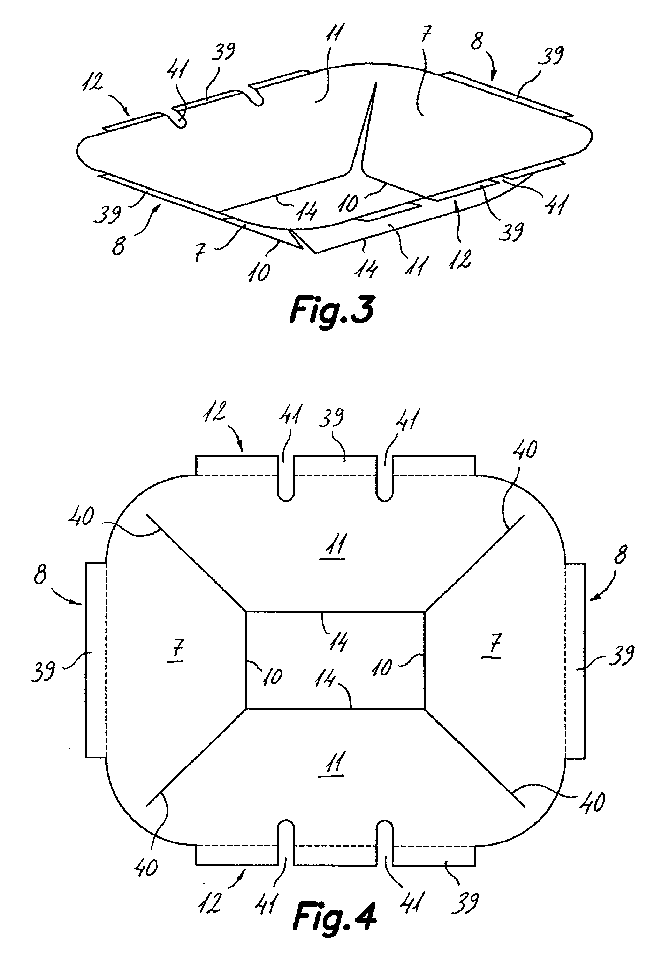

Advantageously, as best shown in Figs. 2, 3 and 4 the first and second deflection screens 7, 11 have areas adjacent to their respective upper edges 8, 12 joined together defining an upper perimetrical frame. This upper perimetrical frame is sized and configured and shaped so that it can rest on shoulders 15 (Fig. 1) on first and second internal side walls 9, 13 of vessel 1. From the upper perimetrical frame the first and second deflection screens 7, 11 extend towards the centre and towards the bottom of vessel 1. In the illustrated exemplary embodiment, the upper perimetrical frame together with the first and second deflection screens 7, 11 have been designed so as to form an integral single piece (shown in its flat development in Fig. 4) that can be obtained by punching and bending a metal plate. With this, the deflection means can be easily and economically produced. Moreover, the way of supporting the deflection means by supporting the upper perimetrical frame on said shoulders 15 makes it possible to place the deflection means inside vessel 1 and remove them therefrom easily and comfortably. To do this, as best shown in Fig. 4, the piece of metal plate forming deflection screens 7, 11 has a central opening defining lower edges 10, 14, and cuts 40 are arranged to facilitate the bending of deflection screens 7, 11 downwards. Upper edges 8, 12 of the upper perimetrical frame of the piece of metal plate define tabs 39 intended to remain bent outwards so as to rest on shoulders 15 of first and second internal side walls 9, 13 of vessel 1. On upper edges 12 of second deflection screens 11 notches 41 are formed the purpose of which will be explained below.

According to an exemplary embodiment not shown, the fryer has a rectangular vessel 1 similar to that shown in Figs. 1 and 2, and the handle 6 of basket 5 is connected to one side of basket 5 adjacent to one of the first mutually facing internal side walls 9 of vessel 1 when basket 5 is in an operating position, that is, immersed at least partially in layer of oil 2. In this exemplary example not shown, the deflection means include only one pair of tilted deflection screens 7 placed one in front of the other. These deflection screens 7 have respective upper edges 8 adjacent to said first mutually facing internal side walls 9 of vessel 1 and respective lower edges 10 opposite said upper edges 8 and lying closer to the centre and closer to the bottom of vessel 1 than upper edges 8. Preferably, deflection screens 7 have side edges adjacent to second internal side walls 13 of the tank. In this case, the single pair of deflection screens 7 is enough since by virtue of the position of handle 6, the natural movement of shaking basket 5 is generally produced in the longitudinal direction of the handle 6 indicated by arrow 28.

It will be understood, however, that the number of deflection screens is not limited. For example, with a circular vessel having for example a cylindrical internal side wall, a single screen in an inverted frustoconical shape could be sufficient, with an upper edge adjacent to said internal side wall and a lower edge lying closer to the centre and closer to the bottom of the vessel than said upper edge. With a vessel of any configuration, a relatively high number of narrow deflection screens could be provided, one next to each other or even overlapped. In many cases, an easy and economical way of building the deflection screens is by joining them together in areas adjacent to the upper edges thereof to define an upper perimetrical frame from which the deflection screens extend towards the centre and towards the bottom of the vessel. Moreover, this upper perimetrical frame can be sized and configured and/or shaped to rest on said shoulders on said internal side walls of the vessel.

Underneath deflection screens 7, 11 a tray 29 is provided that is adapted to collect frying sediments coming from the layer of oil 2 which deposit in the layer of water 3. Said tray 29 has a grating at the bottom and is provided with handles 30, which, when tray 29 is in the operating position shown in Fig. 1, project preferably from the top level 18 of layer of oil 2. The above-mentioned notches 41 formed in the upper perimetrical frame of the piece of metal plate forming deflection screens 7, 11 are for accomodating said handles 30. With this, periodically, the sediments can be removed by extracting basket 5, control box 21 with heating element 4, deflection screens 7, 11 and tray 29. The fryer includes a cover 31 adapted to be placed on the top of vessel 1 even with basket 5 in the operating position and during the frying. Cover 31 has a handle 32 for the handling thereof.

In the lowest point of vessel 1 an outlet 33 is provided fitted with a valve 34 connected by means of a rod 35 to an external lever 36. By acting on lever 36 it is possible to open valve 34 to allow a desired amount of water to leave from layer of water 3 in a controlled manner so as to cause the top level 18 of layer of oil 2 to descend. This is useful and even necessary, for example, when the quantity of food to be fried is large. Top level 18 of layer of oil 2 can be made to rise by adding water directly onto layer of oil 2 when the oil is cold. Owing to the difference in densities, the added water will pass down through layer of oil 2 and join the layer of water 3. On one side of external housing 17 an inspection window 38 is provided through which said boundary surface 19 between the oil and water layers 2, 3 can be observed to control the level thereof. In addition and in order to control the level or volume of water in the fryer an electronic level sensor device (not shown) can be fitted based on the principle of the difference between the electrical continuity of the oil and the water.

Those skilled in the art will be able to introduce variations and modifications in the exemplary embodiment shown and described without departing from the scope of the present invention as defined in the attached claims.

## Claims

1. Fryer with oil on water, of the type comprising a vessel (1) for containing oil and water, wherein a layer of oil (2) is formed on top of a layer of water (3) by difference of density between both liquids, at least one heating element (4) immersed in the layer of oil for heating the layer of oil, temperature control means for controlling the temperature of the oil, and a basket (5) with perforated walls for containing food to be fried adapted to be immersed at least partially in a top region of the layer of oil (2) above said heating element (4), **characterised in that** the fryer includes deflection means immersed in the layer of oil underneath the heating element (4) and configured and arranged to divert and dissipate turbulent currents or movements produced in the layer of oil (2) by shaking the basket (5), or movements of or knocks to the fryer ensemble, and thereby preventing the oil from a top region of layer of oil (2) at a temperature higher than the boiling temperature of water from coming into contact with layer of water (3).

2. Fryer, according to claim 1, **characterised in that** said deflection means include at least one deflection screen having an upper edge adjacent to an internal side wall of vessel (1) and a lower edge lying closer to the centre and closer to the bottom than said deflection screen.

3. Fryer, according to claim 1, **characterised in that** the deflection means include several tilted deflection screens (7, 11) having respective upper edges (8, 12) adjacent to internal side walls (9, 13) of vessel (1) and respective lower edges (10, 14) opposite to said upper edges (8, 12) and lying closer to the centre and closer to the bottom of vessel (1) than upper edges (8, 12).

4. Fryer, according to claim 3, **characterised in that** areas adjacent to upper edges (8, 12) of said deflection screens (7, 11) are joined together defining an upper perimetrical frame from which deflection screens (7, 11) extend towards the centre and towards the bottom of vessel (1), said upper perimetrical frame being sized and configured and/or shaped to rest on shoulders (15) on said internal side walls (9, 13) of vessel (1).

5. Fryer, according to claim 1, **characterised in that** said vessel (1) is substantially rectangular and includes first mutually facing internal side walls (9), second mutually facing internal side walls (13), and a bottom wall (16), and **in that** the deflection means include at least one pair of tilted first deflection screens (7) located one in front of the other, said first deflection screens (7) having respective upper edges (8) adjacent to said first mutually facing internal side walls (9) of vessel (1) and respective lower edges (10) opposite said upper edges (8) and lying closer to the centre and closer to the bottom of vessel (1) than upper edges (8).

6. Fryer, according to claim 5, **characterised in that** basket (5) is provided with a handle (6) that is arranged to remain in an accessible position when basket (5) is immersed at least partially in layer of oil (2), said handle (6) being connected to one side of basket (5) adjacent to one of first mutually facing internal side walls (9) of vessel (1) when basket (5) is immersed at least partially in layer of oil (2) in an operating position.

7. Fryer, according to claim 6, **characterised in that** first internal side walls (9) of vessel (1) are shorter than second internal side walls (13).

8. Fryer, according to claim 5, **characterised in that** the deflection means include at least one pair of second tilted deflection screens (11) placed one in front of the other, said second deflection screens (11) having respective upper edges (12) adjacent to said second mutually facing internal side walls (13) of vessel (1) and respective lower edges (14) opposite said upper edges (12) and lying closer to the centre and closer to the bottom of vessel (1) than upper edges (12).

9. Fryer, according to claim 8, **characterised in that** areas adjacent to upper edges (8, 12) of said first and second deflection screens (7, 11) are joined together defining an upper perimetrical frame from which first and second deflection screens (7, 11) extend towards the centre and towards the bottom of vessel (1), said upper perimetrical frame being sized and configured and/or shaped to rest on shoulders (15) on first and second internal side walls (9, 13) of vessel (1).

10. Fryer, according to claim 4 or 9, **characterised in that** said upper perimetrical frame and first and second deflection screens (7, 11) are integral of one piece that can be obtained by punching and bending a metal plate.
